# FASCICULE DE BREVET EUROPEEN

(11) **EP 0 623 991 B1**
(45) Date de publication et mention de la délivrance du brevet: **11.06.1997**
(21) Numéro de dépôt: 94440028.2
(22) Date de dépôt: 28.04.1994
(51) Int. Cl.: H02M 5/293, H05B 41/392, H05B 39/04, H02M 5/257

(54) **Dispositif de commande de variation de puissance et/ou de vitesse d'une charge**
Leistungs oder Geschwindigkeitssteuerung einer Last
Dimming device for a load

(30) Priorité: 05.05.1993 FR 9305548
(43) Date de publication de la demande: 09.11.1994
(73) Titulaire: ALIADE, 68300 Saint-Louis (FR)
(72) Inventeur: Plumer, Louis, F-39100 Dole (FR); Abignoli, Michel, F-54000 Villers-Les-Nancy (FR); Mansouri, Abdelkader, F-54000 Nancy (FR); Jacob, Michel, F-56700 Hennebont (FR)
(74) Mandataire: Rhein, Alain

(56) Documents cités:
- EP-A- 0 103 997
- EP-A- 0 184 659
- EP-A- 0 311 995
- GB-A- 2 100 481
- US-A- 4 507 569

## Description

L'invention a trait à un dispositif de commande de variation de puissance et/ou de vitesse d'une charge, tel que d'un moteur asynchrone, synchrone, universel, d'un transformateur, d'une inductance, d'un condensateur ou d'une résistance, comprenant un interrupteur de type bidirectionnel à transistor MOS, IGBT ou bipolaire placé sur une phase d'un circuit d'alimentation à courant alternatif monophasé ou polyphasé, cet interrupteur étant associé à des moyens de gestion du rapport cyclique α/T où α correspond au temps d'ouverture ou de fermeture du circuit par l'interrupteur et T à la période de la phase sur laquelle ce dernier est placé.

En tant que dispositif de commande de variation de puissance et/ou de vitesse d'une charge, tel que d'un moteur asynchrone, synchrone, universel ou encore d'un transformateur, d'une inductance, d'un condensateur ou d'une résistance, on connaît, plus particulièrement à l'heure actuelle, le gradateur à triac et le hacheur à haute fréquence regroupant, tel que décrit ci-dessus, un interrupteur placé sur le circuit d'alimentation à courant alternatif, ainsi que des moyens de gestion du temps d'ouverture et/ou de fermeture de ce circuit par l'interrupteur au cours d'une alternance ou période du courant d'alimentation. Ces moyens de gestion permettent, ainsi, de moduler, précisément, la vitesse et/ou la puissance de ladite charge.

Toutefois, ces dispositifs de commande connus conduisent à un certain nombre d'inconvénients.

Notamment le gradateur à triac est de fonctionnement peu souple et génère, lors des commutations, des pointes de courant très importantes dans le réseau d'alimentation auquel il est raccordé. Il en résulte des bruits caractéristiques dans les circuits magnétiques et l'apport de courants harmoniques à la charge d'où la production de forces contre-électromotrices importantes et un couple très faible à basse vitesse. Un tel dispositif crée, évidemment, des perturbations radio et télévision et des harmoniques polluant le réseau d'alimentation.

Le dispositif de commande, du type hacheur à haute fréquence, permet de remédier, partiellement, à l'inconvénient du bruit magnétique engendré par le gradateur à triac, en reportant ce bruit à des fréquences non audibles par l'oreille humaine. En outre, il provoque l'échauffement des transistors qui le composent, ainsi que de la charge. En effet, l'échauffement des transistors résulte des nombreuses commutations engendrées par ce hacheur, tandis que l'échauffement de la charge est lié aux pertes par courant de Foucault dans les circuits magnétiques. De plus, on retrouve, avec un tel hacheur à haute fréquence, les mêmes inconvénients, tels production de forces contre-électromotrices par la charge, des perturbations radio et télévision et des harmoniques polluant le réseau, déjà énumérés à propos du gradateur à triac.

De plus, on connaît, par le document EP-A-0.184.659 une commande de l'énergie électrique délivrée par une source à une charge et plus particulièrement un appareil de multiplexage pour réduire le nombre d'éléments et d'interconnexions nécessaires entre au moins un moyen de commutation de commande de puissance, en série avec la charge et la source, et un circuit de commande pour actionner correctement ledit moyen de commutation. En fait, il est pour objectif au travers de l'invention décrite dans ce document antérieur de maintenir sous contrôle une quantité dV/dt à l'ouverture du circuit par l'intermédiaire de moyens de commutation et, finalement, de limiter cette quantité en vue d'éviter la production d'une force contre-électromotrice trop importante, ceci en intervenant sur la vitesse de commutation du transistor à l'ouverture.

En définitive, on décrit, dans ce document antérieur, un dispositif interne à un composant pour assurer son bon fonctionnement, plus particulièrement de deux interrupteurs. Ainsi, si la commutation d'un de ces interrupteurs intervient trop vite, la valeur dV/dt devient trop importante ce qui entraîne le déclenchement du deuxième interrupteur et, donc, la mise en court-circuit de ces interrupteurs et, par suite, leur destruction.

Finalement, l'invention exposée dans ce document EP-A-0.184.659 a pour objectif d'utiliser la commande de façon à limiter l'élévation de la température suite aux commutations et, pour cela, il est prévu de travailler en boucle fermée, c'est à dire que l'on mesure, initialement, une valeur qui est ensuite corrigée en intervenant sur le temps de commutation à l'ouverture du circuit d'alimentation.

Il est également connu par le document EP-A-0.103.997 un système de contrôle de la puissance d'un circuit d'alimentation à courant alternatif En fait, il est pour objectif au travers de ce système, de limiter les interférences radio dues aux séquences de commutation du circuit d'alimentation, ceci en intervenant sur la vitesse de commutation du transistor au moment de l'ouverture. En fin de compte, dans le cadre de ce document antérieur, l'on contrôle la puissance fournie à la charge par le contrôle du passage d'un nombre n d'alternances. Finalement, on tente d'éviter toute surtension sur le transistor pour éviter sa destruction suite à une charge électrique importante dans la SELF. Il convient d'observer, à ce propos, que le système dont il est question ici, est appliqué à un ballaste.

En définitive, la vitesse de commutation est ralentie au moyen de condensateur par effet Miller. Ainsi, ce système procède à un comptage d'un nombre donné de lobes au-delà duquel il est commandé l'ouverture de l'interrupteur. Le système contrôle à cet instant, l'intensité du courant à l'ouverture i qui est variable puisque l'on ne gère pas, au travers de ce système, le moment précis, au cours d'une onde, où s'effectue l'ouverture.

La présente invention a pour but, précisément, de remédier à l'ensemble de ces inconvénients rencontrés au travers des dispositifs de commande connus, par exemple, en assurant la suppression des bruits magnétiques et en réduisant, considérablement, la force contre-électromotrice produite par la charge, conduisant à un rendement largement supérieur. Cette invention se propose, en outre, de régler le problème des harmoniques polluants en permettant de supprimer ou de réduire notamment ceux qui sont d'amplitude supérieure aux normes souvent imposées par les producteurs et distributeurs de courant électrique.

L'invention, telle qu'elle est caractérisée dans les revendications, résout le problème et consiste en un dispositif de commande de variation de puissance et/ou de vitesse d'une charge telle que d'un moteur asynchrone, synchrone, universel, d'un transformateur, d'une inductance, d'un condensateur ou d'une résistance, comprenant un interrupteur du type bidirectionnel a transistor MOS, IGBT ou bipolaire, placé sur une phase d'un circuit d'alimentation à courant alternatif monophasé ou polyphasé, cet interrupteur étant associé à des moyens de gestion du rapport cyclique α/T où α correspond au temps d'ouverture ou de fermeture du circuit par l'interrupteur et T à la période de la phase sur laquelle ce dernier est placé, caractérisé par le fait que l'interrupteur est associé à des moyens de contrôle du temps de commutation du type DRIVER, à même de prolonger le temps de commutation à la fermeture de sorte qu'il se situe dans une plage comprise entre 10 microsecondes et 1 milliseconde, tandis que les moyens de gestion du rapport cyclique α/T constituent, en outre, des moyens à même de commander l'ouverture du circuit d'alimentation en courant alternatif au travers de l'interrupteur lorsqu'on se situe au champ coercitif du circuit magnétique de la charge, soit dans un délai maximum, après inversion du sens de courant, correspondant au quart d'une demi période T tant que l'on est inférieur à un seuil de déclenchement du courant nominal correspondant au tiers de la valeur de courant nominal maximum.

L'invention concerne également un dispositif de variation de puissance et/ou de vitesse d'une charge, tel que d'un moteur asynchrone, synchrone, universel, d'un transformateur, d'une inductance, d'un condensateur ou d'une résistance, comprenant une interrupteur placé sur une phase d'un circuit d'alimentation à courant alternatif monophasé ou polyphasé, cet interrupteur étant associé à des moyens de gestion du rapport cyclique α/T où α correspond au temps d'ouverture ou de fermeture du circuit par l'interrupteur et T à la période de la phase sur laquelle ce dernier est placé, l'interrupteur étant du type bidirectionnel à transistor MOS, IGBT ou bipolaire, tandis que les moyens de gestion sont déterminés aptes à commander plusieurs cycles d'ouverture et de fermeture du circuit pendant une demi-période, les instants de déclenchement du ou des cycles étant pré-réglés ou déterminés par un circuit de détection approprié, pour la suppression ou pour atténuer un ou plusieurs harmoniques générés par un premier cycle d'ouverture et de fermeture.

Les avantages obtenus grâce à cette invention consistent, essentiellement, en ce que le dispositif de commande auquel elle aboutit, tout en faisant appel à des composants électroniques économiques pour l'obtention d'un coût de revient peu onéreux, permet d'obtenir des résultats non encore égalés par les dispositifs de commande connus. Ainsi, au travers d'une parfaite gestion du temps de commutation de l'interrupteur, il est possible, de faire varier la vitesse et/ou la puissance d'une charge, sans qu'il en résulte, pour autant, un bruit magnétique ou encore la production d'harmoniques polluant le réseau d'alimentation.

D'autres buts et avantages de la présente invention apparaîtront au cours de la description qui va suivre appuyée par des dessins en annexe et se rapportant à un mode de réalisation donné à titre d'exemple.
- la figure 1 représente le chronogramme de la tension Vc du circuit d'alimentation à courant alternatif;
- la figure 2 représente le chronogramme de la tension Vs aux bornes de la charge ;
- la figure 3 illustre, de manière schématisée, le cycle d'hystérésis de l'aimantation du circuit magnétique de la charge, suite au découpage d'une alternance au moyen de l'interrupteur, ceci tel que représenté par le chronogramme de la figure 2 ;
- la figure 4 est une représentation du chronogramme de la tension de commande Vc aux bornes du DRIVER et issue des moyens de gestion du rapport cyclique α/T ;
- la figure 5 correspond au schéma fonctionnel du dispositif de commande raccordé à une charge, tel qu'un moteur asynchrone.

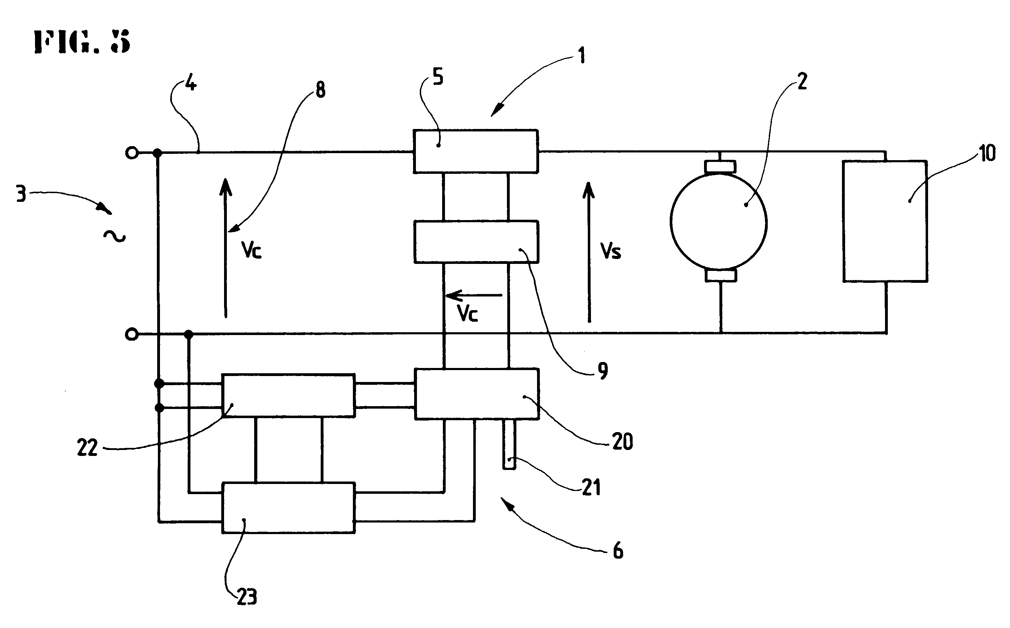

Telle que représentée dans la figure 5, la présente invention est relative à un dispositif de commande 1 de variation de puissance et/ou de vitesse d'une charge 2 qui, dans le cadre des dessins et de la description qui va suivre, est constitué, plus particulièrement, par un moteur asynchrone. Il est bien évident, cependant, que la présente invention et donc le dispositif de commande 1, est également applicable à d'autres types de charges, tel qu'un moteur synchrone, un moteur universel, un transformateur, une inductance, un condensateur ou encore une résistance.

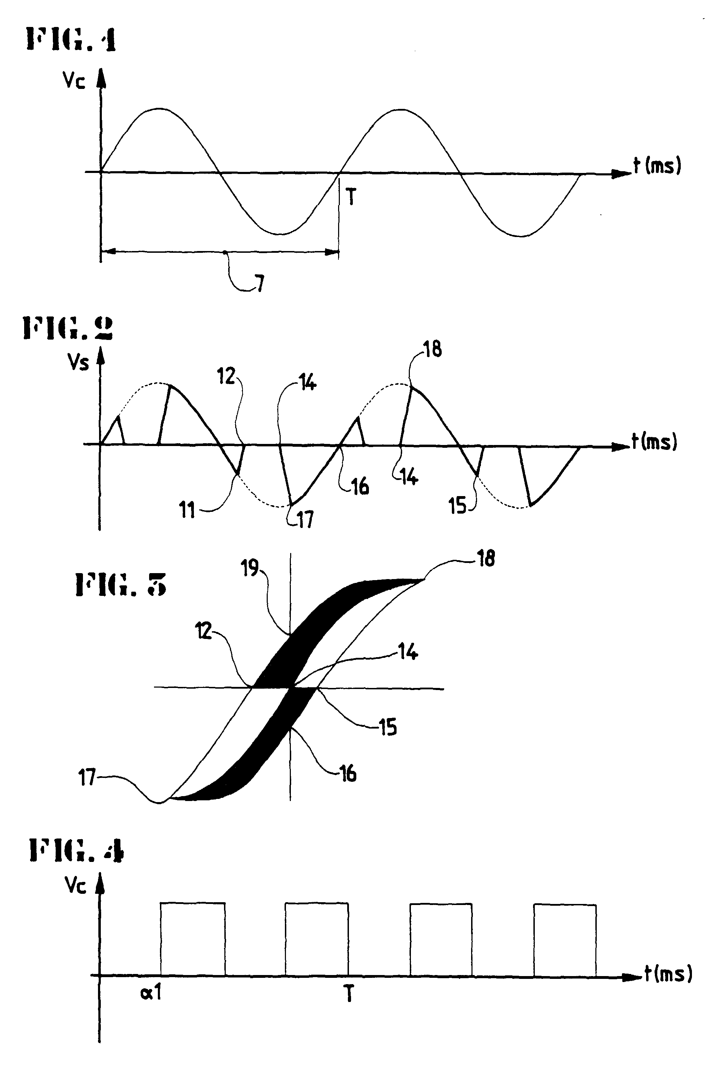

Cette charge 2 est raccordée aux bornes d'un circuit d'alimentation à courant alternatif du type monophasé ou polyphasé et de tension Vc représentée sur le chronogramme de la figure 1.

Au niveau de l'une des phases 4 de ce circuit d'alimentation en courant alternatif 3 vient s'interposer le dispositif de commande 1. Celui-ci comporte, tout particulièrement, un interrupteur 5 placé sur cette phase 4 et associé à des moyens de gestion 6 du rapport cyclique α/T où α correspond au temps d'ouverture ou de fermeture du circuit 3 par l'intermédiaire de l'interrupteur 5 et T à une alternance ou période de la phase 4 tel que cela ressort des chronogrammes des figures 1, 2 et 4. A noter que dans le cadre de ces chronogrammes, il est représenté le cas où les moyens de gestion 6 commandent une seule ouverture suivie d'une fermeture du circuit 3 par demi-alternance ou période T par l'intermédiaire de l'interrupteur 5. Il est prévu selon l'invention que ces moyens de gestion 6 sont aptes à commander plusieurs cycles d'ouverture et de fermeture du circuit pendant une demi-période pour atténuer davantage les harmoniques polluant le réseau. En réalité, le déclenchement de ce ou ces cycles suivant le premier sont commandés à des instants pré-réglés suite à des mesures expérimentales ou détectées par un circuit de détection approprié, pour assurer la suppression ou pour atténuer un ou plusieurs harmoniques générés.

Selon l'invention, l'interrupteur 5 est du type bidirectionnel à transistor MOS, IGBT ou bipolaire associé à des moyens redresseurs de courant, du type pont de diode ou à transistor MOS.

En outre, cet interrupteur bidirectionnel à transistor 5 peut être associé à des moyens de contrôle 9, du type DRIVER, à même de contrôler son temps de commutation plus particulièrement à la fermeture, ceci en vue de prolonger ce temps de commutation de sorte qu'il se situe dans une plage comprise entre 10 microsecondes et 1 milliseconde. A noter qu'en ce qui concerne le temps de commutation maximum il est limité par la capacité thermique et le mode de refroidissement de l'interrupteur 5, ainsi que par le courant commuté.

Si l'on tient compte, du fait, que le temps normal de commutation d'un transistor, notamment MOS, est compris entre 65 nano-secondes 160 nano-secondes, il en résulte, au moment des commutations, des fronts raides au niveau de la courbe décrite par la tension d'alimentation aux bornes de la charge 2. Or, cela a pour conséquence la création de pointes de courant très importantes dans le réseau, qui tel que déjà précisé, provoquent les bruits magnétiques caractéristiques et les perturbations que l'on connaît.

En procédant, tout particulièrement à la fermeture, à la suppression de ces fronts raides par des pentes progressives, telles qu'illustrées sur le chronogramme de la figure 2 et, finalement en augmentant le temps de commutation, l'on remédie aux inconvénients précédemment mentionnés, c'est-à-dire à la suppression des pointes de courant importantes qui en sont à l'origine.

Quant au DRIVER il est constitué par un photocoupleur assurant l'isolation galvanique entre le circuit de puissance et le circuit de commande. Il permet aussi d'assurer une fermeture lente de l'interrupteur de puissance en chargeant progressivement la capacité d'entrée du transistor.

Selon l'invention, il est raccordé, en parallèle de la charge 2, des moyens 10 de récupération de l'énergie stockée par cette dernière, notamment lorsqu'il s'agit d'un moteur, lors de l'ouverture de l'interrupteur bidirectionnel à transistor 5. De tels moyens 10 sont constitués, avantageusement, par un second interrupteur bidirectionnel à transistor analogue au précédent, mais commandé en opposition, ou encore par un condensateur. Il est important, en effet, de récupérer cette énergie sans quoi il y a production d'une force contre-électromotrice et consommation de puissance réactive.

Selon une autre caractéristique de l'invention, les moyens de gestion 6 du rapport cyclique α/T constituent, en outre, des moyens de commande d'ouverture du circuit d'alimentation 3, au travers de l'interrupteur 5, lorsque l'on se situe autour du champ coercitif du circuit magnétique de la charge 2. Ainsi, il est recommandé, selon l'invention, que l'ouverture du circuit s'effectue dans un délai maximum, après inversion du sens du courant, correspondant au quart d'une demi-période 1/2 T et tant que l'on est inférieur à un seuil de déclenchement du courant nominal correspondant au tiers de la valeur du courant nominal maximum.

La figure 3 illustre le cycle d'hystérésis du circuit magnétique, précisément, après découpage du circuit d'alimentation au travers de l'interrupteur bidirectionnel à transistor 5 et, par conséquent, lors d'une tension Vs aux bornes de la charge 2 correspondant au chronogramme de la figure 2. Ainsi, on observe que l'ouverture du circuit est commandée, par exemple, lorsque la tension Vs se situe au point 11 de ce chronogramme ceci au travers des moyens de gestion 6. Dans ces conditions, l'on se situe sur le cycle d'hystérésis, représenté dans la figure 3, au point 12, correspondant au champ coercitif du circuit magnétique de la charge 2. Ainsi, au moment de la fermeture du circuit d'alimentation 3 (point 14 sur la figure 2) le cycle vient à décrire la courbe de première aimantation 14, 17, 16, 15. Lorsque cette ouverture, suivie de la fermeture, est commandée alors que la tension Vs se situe au-dessus de l'abscisse, le cycle d'hystérésis décrit la courbe d'aimantation 14, 18, 19, 12.

A titre de comparaison, il convient d'observer que les dispositifs de commande connus assurent l'ouverture du circuit, non pas au point zéro du cycle d'hystérésis, mais plus particulièrement, lorsque son champ rémanent est égal à zéro. Ceci a pour conséquence de contribuer, là encore, et pour une part du moins, à la création du bruit magnétique caractéristique.

Les moyens spécifiques pour ouvrir le circuit autour du champ coercitif du circuit magnétique de la charge sont réalisés, dans une configuration en boucle ouverte par un réglage préliminaire expérimental qu'intègre l'ensemble des paramètres du circuit magnétique et de sa charge. Dans une configuration en boucle fermée, il est fait appel à un circuit de détection appliqué, par exemple, dans le cas d'un moteur à une spire isolée ou non du bobinage principal du circuit magnétique. La force électromotrice aux bornes de cette spire correspond à l'image du champ magnétique du circuit et permet de connaître, avec une relative précision, le point zéro magnétique. Ainsi, le circuit de détection permet l'intervention, en boucle fermée, sur le circuit de commande pour obtenir à l'instant souhaité l'ouverture du circuit à l'aide du transistor.

En ce qui concerne les moyens de gestion 6 du rapport cyclique α/T, ceux-ci sont constitués, préférentiellement, par un monostable 20 muni de moyens de commande extérieurs 21 du type potentiomètre commutateur ou autre sur lesquels peut intervenir l'usager pour moduler ce rapport cyclique α/T et par conséquent, la vitesse et/ou la puissance de la charge 2. Ce monostable est alimenté par un courant basse tension, par exemple, 12 volts, au travers d'un abaisseur de tension et filtrage 22 lequel est raccordé aux bornes du circuit d'alimentation en courant alternatif 3.

On note, également, la présence de moyens de mise en forme du signal 23 raccordés au circuit d'alimentation en courant alternatif 3 et ayant pour fonction de délivrer au monostable 20 un signal carré de période T donc synchronisée avec la tension d'alimentation Vc. Ce signal est du type basse tension, les moyens de mise en forme du signal 23 étant raccordés, dans ce but, à l'abaisseur de tension et filtrage 22 qui en assure l'alimentation.

Finalement, c'est à la base de ce signal délivré par les moyens 23 que le monostable 20 délivre, lui-même, un signal carré de rapport cyclique α/T assurant, précisément, la gestion des durées d'ouverture et de fermeture de l'interrupteur 5, les commutations étant contrôlées par le DRIVER 9 interposé entre cet interrupteur 5 et le monostable 20.

En conséquence, le dispositif de commande 1, selon l'invention, apporte une solution à l'ensemble des inconvénients des dispositifs de commande connus jusqu'à présent, à savoir suppression du bruit magnétique et des perturbations radio, télévision, ou encore des harmoniques polluant le réseau, ceci avec un rendement supérieur et un coût de revient similaire. Par conséquent, ce dispositif de commande, selon l'invention, doit être considéré comme un net progrès dans le domaine technique considéré.

## Revendications

1. Dispositif de commande de variation de puissance et/ou de vitesse d'une charge (2) telle que d'un moteur asynchrone, synchrone, universel, d'un transformateur, d'une inductance, d'un condensateur ou d'une résistance, comprenant un interrupteur (5), du type bidirectionnel à transistor MOS, IGBT ou bipolaire, placé sur une phase (4) d'un circuit d'alimentation à courant alternatif (3) monophasé ou polyphasé, cet interrupteur (5) étant associé à des moyens de gestion (6) du rapport cyclique α/T où α correspond au temps d'ouverture ou de fermeture du circuit (3) par l'interrupteur (5) et T à la période de la phase (4) sur laquelle ce dernier est placé, caractérisé par le fait que l'interrupteur (5) est associé à des moyens de contrôle du temps de commutation (9), du type DRIVER, à même de prolonger le temps de commutation à la fermeture de sorte qu'il se situe dans une plage comprise entre 10 microsecondes et 1 milliseconde, tandis que les moyens de gestion (6) du rapport cyclique α/T constituent, en outre, des moyens à même de commander l'ouverture du circuit d'alimentation en courant alternatif (3) au travers de l'interrupteur (5) lorsqu'on se situe au champ coercitif du circuit magnétique de la charge (2), soit dans un délai maximum, après inversion du sens du courant, correspondant au quart d'une demi période T tant que l'on est inférieur à un seuil de déclenchement du courant nominal correspondant au tiers de la valeur du courant nominal maximum.

2. Dispositif de commande selon la revendication 1, caractérisé par le fait qu'en parallèle de la charge (2), sont raccordés des moyens (10) de récupération de l'énergie stockée par cette dernière lors de l'ouverture de l'interrupteur (5).

3. Dispositif selon la revendication 2, caractérisé par le fait que les moyens (10) sont constitués, soit par un second interrupteur bidirectionnel à transistor du type MOS, IGBT ou bipolaire, commandé en opposition par rapport à l'interrupteur (5), soit par un condensateur.

4. Dispositif de commande selon l'une quelconque des revendications 1 à 3, caractérisé par le fait que les moyens de gestion (6) du rapport cyclique α/T sont constitués par un monostable (20) muni de moyens de commande extérieurs (21), du type potentiomètre, commutateur ou autre pour permettre à un usager de moduler ce rapport cyclique α/T et, donc, la vitesse et/ou la puissance de la charge (2).

5. Dispositif de commande selon la revendication 4, caractérisé par le fait que le monostable (20) est alimenté en courant basse tension au travers d'un abaisseur de tension et de filtrage (22) raccordé aux bornes du circuit d'alimentation en courant alternatif (3).

6. Dispositif de commande selon les revendications 4 et 5, caractérisé par le fait qu'il comporte des moyens de mise en forme du signal (23), raccordés au circuit d'alimentation en courant alternatif (3) pour délivrer, au monostable (20), un signal carré de période T et synchronisé avec la tension d'alimentation Vc.

7. Dispositif de commande selon la revendication 6, caractérisé par le fait que les moyens de mise en forme du signal (23) sont raccordés à l'abaisseur de tension et filtrage (22) qui en assure l'alimentation, le signal carré de période T délivré par ces moyens de mise en forme du signal (23) étant du type basse tension.

8. Dispositif de commande selon l'une des revendications 1 à 7 caractérisé par le fait que l'interrupteur (5) est du type bidirectionnel à transistor MOS, IGBT ou bipolaire, tandis que les moyens de gestion (6) sont déterminés aptes à commander plusieurs cycles d'ouverture ou de fermeture du circuit d'alimentation en courant alternatif (3) pendant une demi-période, les instants de déclenchement du ou des cycles étant pré-réglés ou déterminés par un circuit de détection approprié, pour la suppression ou pour atténuer un ou plusieurs harmoniques générés par un premier cycle d'ouverture et de fermeture.

## Patentansprüche

1. Vorrichtung zum Steuern der Leistungs- und/oder Geschwindigkeitsänderung einer Last (2), wie eines Asynchron-, Synchron-, Universalmotors, eines Umformers, einer Induktanz, eines Kondensators oder eines Widerstands, umfassend einen auf einer Phase (4) einer Ein- bzw. Mehrphasen-Wechselstromversorgungsschaltung (3) installierten Schalter (5), der Zweirichtungsart mit MOS-, IGBT- oder zweipoligem Transistor, wobei diesem Schalter (5) Mittel (6) zum Steuern des zyklischen Verhältnisses α/T zugeordnet sind, wo α der Dauer der Öffnung bzw. Schließung der Schaltung (3) durch den Schalter (5) und T der Periode derjenigen Phase (4), auf der dieser letzte installiert ist, entsprechen, dadurch gekennzeichnet, daß dem Schalter (5) Schaltungszeitsteuermittel (9), der Art DRIVER, zugeordnet sind, die geeignet sind, die Schaltungszeit bei der Schließung so zu verlängern, daß sie innerhalb eines Bereichs zwischen 10 Mikrosekunden und 1 Millisekunde liegt, während die Mittel (6) zum Steuern des zyklischen Verhältnisses α/T außerdem Mittel bilden, die geeignet sind, das Öffnen der Wechselstromversorgungsschaltung (3) über den Schalter (5) zu steuern, wenn man sich im koerzitiven Feld des Magnetkreises der Last (2) befindet, d.h. während einer Höchstzeit nach dem Umkehr der Stromrichtung, die einem Viertel einer halben Periode T entspricht, solange eine Nennstrom-Auslösungsschwelle, die einem Drittel des Höchstnennstromwertes entspricht, unterschritten ist.

2. Steuervorrichtung nach Anspruch 1, dadurch gekennzeichnet, daß mit der Last (2) Mittel (10) zum Zurückgewinnen der von dieser letzten während der Öffnung des Schalters (5) gespeicherten Energie parallelgeschaltet sind.

3. Vorrichtung nach Anspruch 2, dadurch gekennzeichnet, daß die Mittel (10) entweder aus einem zweiten, auf dem Schalter (5) entgegengesetzte Weise gesteuerten Zweirichtungsschalter mit MOS-, IGBT- oder zweipoligem Transistor oder aus einem Kondensator bestehen.

4. Steuervorrichtung nach irgendeinem der Ansprüche 1 bis 3, dadurch gekennzeichnet, daß die Mittel (6) zum Steuern des zyklischen Verhältnisses α/T aus einer monostabilen Schaltung (20) bestehen, die mit externen Steuermitteln (21), wie einem Potentiometer, einem Schalter oder dergleichen, versehen ist, um es einem Gebraucher zu erlauben, dieses zyklische Verhältnis α/T und somit die Geschwindigkeit und/oder die Leistung der Last (2) zu modulieren.

5. Steuervorrichtung nach Anspruch 4, dadurch gekennzeichnet, daß die monostabile Schaltung (20) über eine an den Anschlußklemmen der Wechselstromversorgungsschaltung (3) angeschlossene Spannungssenkungs- und Filtrierschaltung (22) mit Niedrigspannungsstrom versorgt wird.

6. Steuervorrichtung nach Ansprüchen 4 und 5, dadurch gekennzeichnet, daß sie an der Wechselstromversorgungsschaltung (3) angeschlossene Signalgestaltungsmittel (23) umfaßt, um der monostabilen Schaltung (20) ein mit der Versorgungsspannung Vc synchronisiertes, viereckiges Signal mit einer Periode T zu liefern.

7. Steuervorrichtung nach Anspruch 6, dadurch gekennzeichnet, daß die Signalgestaltungsmittel (23) an der Spannungssenkungs- und Filtrierschaltung (22) angeschlossen sind, die die Stromversorgung derselben sichert, wobei das von diesen Signalgestaltungsmitteln (23) gelieferte, viereckige Signal mit einer Periode T der Niedrigspannungsart ist.

8. Steuervorrichtung nach einem der Ansprüche 1 bis 7, dadurch gekennzeichnet, daß der Schalter (5) der Zweirichtungsart mit MOS-, IGBT- oder zweipoligem Transistor ist, während die Steuermittel (6) so bestimmt sind, daß sie geeignet sind, während einer halben Periode mehrere Öffnungs- bzw. Schließungszyklen der Wechselstromversorgungsschaltung (3) zu steuern, wobei die Auslösungsmomente des oder der Zyklen von einer geeigneten Detektionsschaltung voreingestellt oder bestimmt sind, um eine oder mehrere, durch einen ersten Öffnungs- bzw. Schließungszyklus erzeugte Oberschwingungen zu unterdrücken oder zu dämpfen.

## Claims

1. Device for controlling the power and/or speed variation of a load (2), such as of an asynchronous, synchronous, universal motor, a transformer, an inductance, a condenser or a resistor, comprising a switch (5), of the bidirectional type with a MOS, IGBT or bipolar transistor, installed on one phase (4) of a single-phase or multiple-phase alternating-current supply circuit (3), this switch (5) being associated with means (6) for controlling the cyclical ratio α/T, where α corresponds to the time of opening or closing of the circuit (3) by the switch (5) and T to the period of the phase (4) on which this latter is installed, characterized in that the switch (5) is associated with switching-time control means (9), of the DRIVER type, capable of so extending the switching time at the closing that it be within a range varying from 10 microseconds to 1 millisecond, whilst the means (6) for controlling the cyclical ratio α/T form, in addtion, means capable of controlling the opening of the alternating-current supply circuit (3) through the switch (5) when being at the coercive field of the magntic circuit of the load (2), i.e. during a maximum time upon reversal of the direction of the current corresponding to one fourth of half a period T as long as one is below a tripping threshold for the rated current corresponding to one third of the maximum rated-current value.

2. Control device according to claim 1, characterized in that in parallel with the load (2) are connected means (10) for recovering the energy accumulated by this latter during the opening of the switch (5).

3. Device according to claim 2, characterized in that the means (10) are formed either by a second bidirectional switch with a MOS, IGBT or bipolar transistor controlled in opposition to the switch (5) or by a condenser.

4. Control device according to any of claims 1 to 3, characterized in that the means (6) for controlling the cyclical ratio α/T are formed by a monostable circuit (20) provided with external control means (21), such as a potentiometer, a switch or the like, in order to allow a user to modulate this cyclical ratio α/T and thus the speed and/or the power of the load (2).

5. Control device according to claim 4, characterized in that the monostable circuit (20) is fed with low-voltage current through a voltage-reducing and filtering circuit (22) connected to the terminals of the alternating-current supply circuit (3).

6. Control device according to claims 4 and 5, characterized in that it includes signal-shaping means (23) connected to the alternating-current supply circuit (3) for supplying to the monostable circuit (20) a square signal with a period T and synchronized with the supply voltage Vc.

7. Control device according to claim 6, characterized in that the signal-shaping means (23) are connected to the voltage-reducing and filtering circuit (22) which ensures its feeding, the square signal with a period T supplied by these signal-shaping means (23) being of the low-voltage type.

8. Control device according to any of claims 1 to 7, characterized in that the switch (5) is of the bidirectional type with a MOS, IGBT or bipolar transistor, whilst the control means (6) are so determined as to be capable of controlling several opening or closing cycles of the alternating-current supply circuit (3) during half a period, the moments of tripping of the cycle or cycles being preset or determined by an appropriate detector circuit for suppressing or attenuating one or several harmonics generated by a first opening or closing cycle.
